# EUROPEAN PATENT APPLICATION

(11) **EP 4 821 760 A1**
(43) Date of publication of application: **14.10.2026**
(21) Application number: 25178888.1
(22) Date of filing: 26.05.2025
(51) Int. Cl.: B60P 7/08

(54) **SAFETY CONTROLLED TENSIONING DEVICE**

(30) Priority: 10.04.2025 CN 202520677415 U
(71) Applicant: Taizhou Runjie Logistics Safety Equipment Science and Technology Co., Ltd., Taizhou, Jiangsu 225300 (CN)
(72) Inventor: Zhou, Jing, Taizhou, Jiangsu, 225300 (CN); Li, Chunzhi, Taizhou, Jiangsu, 225300 (CN); Yang, Xianwei, Taizhou, Jiangsu, 225300 (CN); Ma, Fengquan, Taizhou, Jiangsu, 225300 (CN)
(74) Representative: Cabinet Chaillot

(57) **Abstract**

A safety controlled tensioning device, comprising a tightening frame, a tightening mechanism is arranged inside the tightening frame, a brake assembly for driving the tightening mechanism is fixedly installed on one side of the tightening frame, a second speed reduction mechanism is arranged in a middle position of the tightening frame between the first speed reduction mechanism and the tightening mechanism. The setting of the tightening mechanism connects the end of the movable webbing to the webbing-retracting shaft in different ways, which is both secure and convenient for winding and unwinding the webbing; the set knob switch of the second speed reduction mechanism, whether it works with the reset coil spring, pressure spring, or other components, allows for easy operation and adjustment of the deceleration pin, thereby enabling flexible control of the speed at which the movable webbing is retracted.

## Description

### Technical Field

The invention relates to the technical field of tighteners, and in particular to a safety controlled tensioning device.

### Background

Tensioners are designed to serve a securing function during the transportation, movement, shipment, or storage of goods. They feature a locking mechanism that ensures they won't come loose, offering safety, reliability, portability, and ease of operation, while also protecting objects from damage.

Common tensioners generally comprise a drive handle, a tightening frame, a ratchet, and long and short webbing. When securing goods, the long and short webbing are fixed in place (or the long and short webbing can be interconnected). Then, the drive handle is reciprocated, causing the movable pawl on the drive handle to drive the ratchet, which in turn rotates the semicircular shaft connected to the ratchet, winding the webbing until it is taut, thus securing the goods. When it is necessary to release the goods, simply rotate the drive handle to the specified angle, allowing the movable pawl to disengage from the ratchet. The stopper pawl on the base assembly is pushed up by the flange of the handle side plate of the drive handle, disengaging from the ratchet. At this point, the long webbing can be pulled out, achieving the purpose of releasing the goods.

Current webbing tensioners are typically composed of components such as webbing, a ratchet mechanism, a handle, a base, pawls, and end fittings. For instance, an automatic webbing retracting tensioner disclosed in the patent with publication number CN221757850U comprises a tensioner body, the tensioner body is provided with webbing, further includes a toothed disc, scraper plates and a synchronization assembly; the toothed disc is rotatably installed on the tensioner body; two of scraper plates slidably mounted on the tensioner body, and the webbing is positioned between scraper plates; the synchronization assembly is also installed on the tensioner body. This automatic webbing retracting tensioner rotates the toothed disc, and drives the two scraper plates on either side to move towards each other via the synchronization assembly, simultaneously clamping and pressing the webbing inward. Subsequently, the tensioner automatically retracts the webbing. As the webbing comes into contact with and is pressed against the scraper plates, it undergoes scraping and cleaning, enabling quick and hassle-free removal of debris from the webbing. Moreover, the adjustment process is simple, allowing for easy modification of the distance between the two scraper plates to ensure that debris does not affect the tensioner, and thus will not affect the subsequent use of the tensioner.

However, in the above tensioners, webbing-retracting shafts connected to movable webbing are commonly cylindrical in shape. When connecting the movable webbing and the webbing-retracting shaft, it is inconvenient for installation and connection. Moreover, when winding the movable webbing and the webbing-retracting shaft, it is inconvenient to install and connect, and the speed of the active webbing when rewinding the movable webbing cannot be controlled. Even if there are control structures, they only regulate the tension force through a single friction or meshing method, which can easily result in slipping or excessive tightening. Excessive tightening may cause jamming when releasing the webbing, and if slipping occurs, it can pose safety risks to personnel during webbing retracting. Therefore, a safe tensioning device is required.

### Summary of the invention

In view of the problems mentioned in the background, the object of the invention is to provide a safety controlled tensioning device to solve the problem of inconvenient connection between the webbing-retracting shaft and the webbing, and the inability to adjust the webbing retracting speed.

The above technical object of the invention is achieved through the following technical scheme:

a safety controlled tensioning device, comprising a tightening frame, first through holes are symmetrically arranged at one end of the tightening frame, second through holes are symmetrically arranged at one end of the tightening frame away from the first through holes, a first speed reduction mechanism is installed inside the second through holes, and a driving handle is pivotally installed outside the first speed reduction mechanism, a tightening mechanism is arranged inside the tightening frame, a movable webbing is rolled up on the tightening mechanism, and the movable webbing passes through the first speed reduction mechanism, a brake assembly for driving the tightening mechanism is fixedly installed on one side of the tightening frame, and a fixed webbing is fixedly connected to one end of the tightening frame away from the first speed reduction mechanism, a second speed reduction mechanism is arranged in a middle position of the tightening frame between the first speed reduction mechanism and the tightening mechanism, the movable webbing passes through the second deceleration mechanism.

As a preferred technical scheme, the first speed reduction mechanism comprises a pair of semi-circular shafts passing through the second through holes, limit disks, semi-circular holes, a fixing sleeve, a connecting shaft, and a rotating knob, the semi-circular holes corresponding to the semi-circular shafts are provided with a pair, and are arranged in a middle of each limit disk, both ends of the pair of semi-circular shafts are inserted into the limit disks through the semi-circular holes, a gap is formed between the two semi-circular shafts for the movable webbing to pass through, the fixing sleeve is sleeved on one end of the pair of semi-circular shafts, and the rotating knob is sleeved on the other end of the pair of semi-circular shafts, the fixing sleeve, the rotating knob, and the semi-circular shafts are all connected and limited by the connecting shaft passing through their interiors, the movable webbing passes through the gap between the semi-circular shafts and is wound around the tightening mechanism.

As a preferred technical scheme, a second speed reduction mechanism is arranged in a middle position of the tightening frame between the first speed reduction mechanism and the tightening mechanism, the movable webbing passes through the second deceleration mechanism.

As a preferred technical scheme, the second speed reduction mechanism comprises a deceleration pin, a reset coil spring, a knob switch and a first retaining ring, the deceleration pin passes through the tightening frame and rotates at a certain angle in the tightening frame, notches for passing the movable webbing are arranged in a middle position of the deceleration pin, and one end of the notches of the deceleration pin is set to be open, the reset coil spring is sleeved on an outside of the deceleration pin, and one end of the reset coil spring is lapped and clamped on an outside of the tightening frame, the knob switch is fixedly mounted on one end of the deceleration pin away from the reset coil spring, and one end of the deceleration pin passes through the knob switch, the first retaining ring is sleeved on the outside of the deceleration pin passing through the knob switch.

As a preferred technical scheme, the second speed reduction mechanism comprises a deceleration pin, a knob switch, a first retaining ring, a pressure spring, a gear pin and gear holes, the deceleration pin passes through the tightening frame and rotates at a certain angle in the tightening frame, notches for passing the movable webbing are arranged in a middle position of the deceleration pin, and one end of the notches of the deceleration pin is set to be open, the pressure spring is sleeved on an outside of the deceleration pin, the knob switch is fixedly mounted on one end of the deceleration pin away from the pressure spring, and one end of the deceleration pin passes through the knob switch and is fixedly connected to the first retaining ring, a cylindrical gear pin is formed on one side of the knob switch close to the tightening frame, and multiple gear holes are arranged on a side wall of the tightening frame corresponding to the gear pin.

As a preferred technical scheme, the second speed reduction mechanism comprises a deceleration pin, a first retaining ring, a damping spring, the deceleration pin passes through the tightening frame and rotates in the tightening frame, notches for passing the movable webbing are arranged in a middle position of the deceleration pin, and one end of the notches of the deceleration pin is set to be open, the damping spring is sleeved on an outside of the deceleration pin, the damping spring is arranged between the deceleration pin and a side wall of the tightening frame, and the first retaining ring is sleeved on an end of the deceleration pin away from the damping spring.

As a preferred technical scheme, the second speed reduction mechanism comprises a deceleration pin, a first retaining ring, fixing holes, notches for passing the movable webbing are arranged in a middle position of the deceleration pin, and one end of the notches of the deceleration pin is set to be open, fixing holes are arranged on one side of the tightening frame corresponding to the notches at one open end of the deceleration pin, one end of the deceleration pin with the open notches is inserted into the fixing holes, and the first retaining ring is sleeved on one end of the deceleration pin with the open notches.

As a preferred technical scheme, the tightening mechanism comprises a webbing-retracting shaft, a power joint, a shaft sleeve, a second retaining ring, a flange, a tapered slot and an anchor pin, the webbing-retracting shaft is rotatably mounted inside the tightening frame, the power joint is integrally connected to one end of the webbing-retracting shaft, the power joint is transmission-connected to the brake assembly, the flange is integrally arranged at one end of the webbing-retracting shaft, a shaft sleeve is arranged at a connection between the other end of the webbing-retracting shaft and the tightening frame, the second retaining ring is sleeved on one end of the webbing-retracting shaft close to an outside of the shaft sleeve, the tapered slot is arranged on the webbing-retracting shaft, the anchor pin is fixedly mounted inside the tapered slot, one end of the movable webbing is wound around the anchor pin.

As a preferred technical scheme, the tightening mechanism comprises a webbing-retracting shaft, a power joint, a shaft sleeve, a second retaining ring, a flange and a tongue piece, the webbing-retracting shaft is rotatably mounted inside the tightening frame, the power joint is integrally connected to one end of the webbing-retracting shaft, the power joint is transmission-connected to the brake assembly, the flange is integrally arranged at one end of the webbing-retracting shaft, a shaft sleeve is arranged at a connection between the other end of the webbing-retracting shaft and the tightening frame, the second retaining ring is sleeved on one end of the webbing-retracting shaft close to an outside of the shaft sleeve, a rectangular groove is formed on an surface of the webbing-retracting shaft, the tongue piece is fixedly arranged on an surface of the groove.

As a preferred technical scheme, the tightening mechanism comprises a webbing-retracting shaft, a power joint, a shaft sleeve, a second retaining ring, a flange, a through slot and a webbing-passing slot, the webbing-retracting shaft is rotatably mounted inside the tightening frame, the power joint is integrally connected to one end of the webbing-retracting shaft, the power joint is transmission-connected to the brake assembly, the flange is integrally arranged at one end of the webbing-retracting shaft, a shaft sleeve is arranged at a connection between the other end of the webbing-retracting shaft and the tightening frame, the second retaining ring is sleeved on one end of the webbing-retracting shaft close to an outside of the shaft sleeve, an interior of the webbing-retracting shaft is provided with the rectangular through slot, the webbing-passing slot is located on a surface of the webbing-retracting shaft, and the webbing-passing slot is in communication with the rectangular through slot.

In conclusion, the invention has the following advantageous effects:

firstly, the setting of the tightening mechanism connects the end of the movable webbing to the webbing-retracting shaft in different ways, such as using the webbing loop to sleeve onto the anchor pin, the U-shaped pocket to engage with the tongue piece, or the webbing loop to hook onto the webbing-passing slot. These connection methods are both secure and convenient for winding and unwinding the webbing, and make the connection between the movable webbing and the webbing-retracting shaft stable; in addition, by setting the anchor pin, or using the U-shaped pocket and tongue piece for engagement, or by hooking the webbing loop onto the webbing-passing slot, it helps with the installation and disassembly of the movable webbing, increasing the efficiency of assembly and disassembly;

secondly, the knob switch of the second speed reduction mechanism, whether it works with the reset coil spring, pressure spring, or other components, allows for easy operation and adjustment of the deceleration pin, thereby enabling flexible control of the speed at which the movable webbing is retracted. Additionally, some speed reduction mechanisms are designed with the gear pin and gear holes, allowing for gear adjustment of the rotation angle of the deceleration pin, making operation more precise and convenient. The second speed reduction mechanism comes in various structural forms, enabling users to select according to specific usage scenarios and control requirements for webbing speed and tension. This further enhances control over webbing retraction, preventing problems such as slipping or jamming during retraction. By choosing the appropriate speed reduction mechanism, the device gains better versatility.

### Brief Description of the drawings

FIG. 1 is a schematic diagram of the structure of Embodiment 1 of the invention.
FIG. 2 is a schematic diagram of the exploded structure of Embodiment 1 of the invention.
FIG. 3 is a schematic diagram of the cross-sectional structure of Embodiment 1 of the invention.
FIG. 4 is a schematic diagram of the structure of the second speed reduction mechanism of Embodiment 1 of the invention.
FIG. 5 is a schematic diagram of the structure of the retraction mechanism of Embodiment 1 of the invention.
FIG. 6 is a schematic diagram of the structure of the second speed reduction mechanism of Embodiment 2 of the invention.
FIG. 7 is a schematic diagram of the structure of the second speed reduction mechanism of Embodiment 3 of the invention.
FIG. 8 is a schematic diagram of the structure of the second speed reduction mechanism of Embodiment 4 of the invention.
FIG. 9 is a schematic diagram of the structure of the tightening mechanism of Embodiment 2 of the invention.
FIG. 10 is a schematic diagram of the structure of the tightening mechanism of Embodiment 3 of the invention.

In the figures: 1 tightening frame, 2 first through hole, 3 second through hole, 4 first speed reduction mechanism, 41 semi-circular shaft, 42 limit disk, 43 semi-circular hole, 44 fixing sleeve, 45 connecting shaft, 46 rotating knob, 5 driving handle, 6 tightening mechanism, 61 webbing-retracting shaft, 62 power joint, 63 shaft sleeve, 64 second retaining ring, 65 flange, 66 tapered slot, 67 anchor pin, 68 tongue piece, 69 through slot, 610 webbing-passing slot, 7 movable webbing, 8 brake assembly, 9 fixed webbing, 10 second speed reduction mechanism, 101 deceleration pin, 102 reset coil spring, 103 knob switch, 104 first retaining ring, 105 pressure spring, 106 gear pin, 107 gear hole, 108 damping spring, 109 fixing hole.

### Description of Embodiments

### Embodiment 1

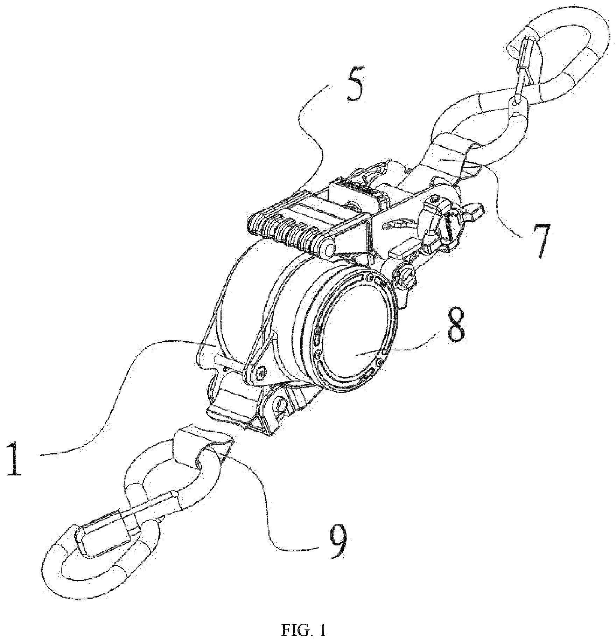

Referring to FIG. 1 to FIG. 5, the embodiment provides a safety controlled tensioning device, comprising a tightening frame 1, first through holes 2 are symmetrically arranged at one end of the tightening frame 1, second through holes 3 are symmetrically arranged at one end of the tightening frame 1 away from the first through holes 2, a first speed reduction mechanism 4 is installed inside the second through holes 3, and a driving handle 5 is pivotally installed outside the first speed reduction mechanism 4, a tightening mechanism 6 is arranged inside the tightening frame 1, a movable webbing 7 is rolled up on the tightening mechanism 6, and the movable webbing 7 passes through the first speed reduction mechanism 4, a brake assembly 8 for driving the tightening mechanism 6 is fixedly installed on one side of the tightening frame 1, and a fixed webbing 9 is fixedly connected to one end of the tightening frame 1 away from the first speed reduction mechanism 4. By setting the first speed reduction mechanism 4 and the tightening mechanism 6, the installation and removal of the movable webbing 7 are made easier. The various installation methods for the movable webbing 7 enhance the applicability of this device. The driving handle 5 and the brake assembly 8 in this device are both prior art, please refer to the patent publication number CN222629196U, titled "Intelligent Safety Control Webbing Tensioning Device," specifically the handle assembly and the spring assembly. These are not discussed in detail here.

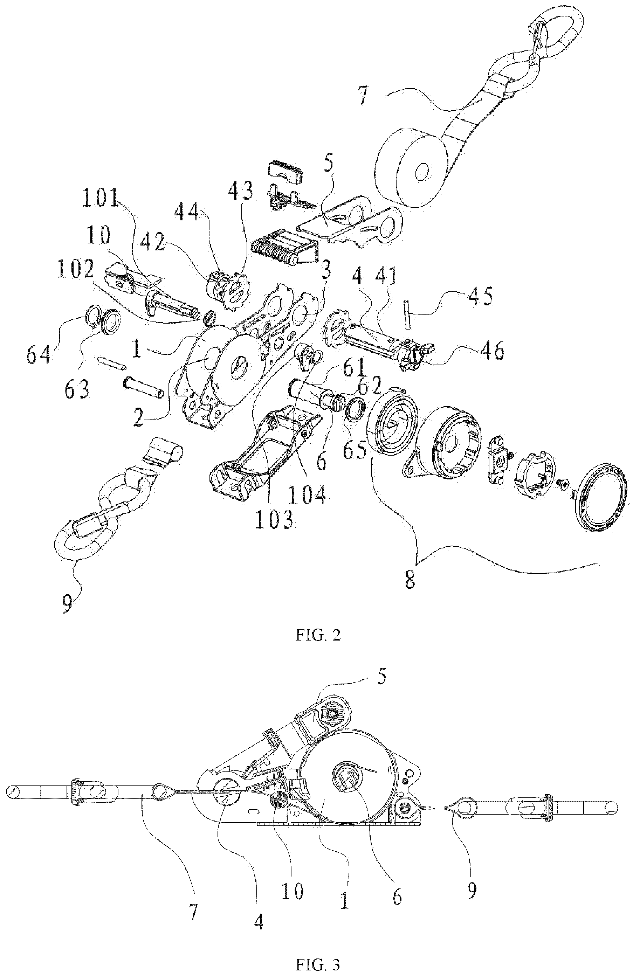

Referring to FIG. 2, the first speed reduction mechanism 4 comprises a pair of semi-circular shafts 41 passing through the second through holes 3, limit disks 42, semi-circular holes 43, a fixing sleeve 44, a connecting shaft 45, and a rotating knob 46, the semi-circular holes 43 corresponding to the semi-circular shafts 41 are provided with a pair, and are arranged in a middle of each limit disk 42, both ends of the pair of semi-circular shafts 41 are inserted into the limit disks 42 through the semi-circular holes 43, a gap is formed between the two semi-circular shafts 41 for the movable webbing 7 to pass through, the fixing sleeve 44 is sleeved on one end of the pair of semi-circular shafts 41, and the rotating knob 46 is sleeved on the other end of the pair of semi-circular shafts 41, the fixing sleeve 44, the rotating knob 46, and the semi-circular shafts 41 are all connected and limited by the connecting shaft 45 passing through their interiors; the semi-circular shafts 41 with semi-circular cross-sections are inserted and engaged into the semi-circular holes 43 of the limit disks 42, forming an adjustable webbing channel; the limit disks 42 are set on both sides of the tightening frame 1, and they axially limit the semi-circular shafts 41 through the semi-circular holes 43, preventing them from detaching from the tightening frame 1.

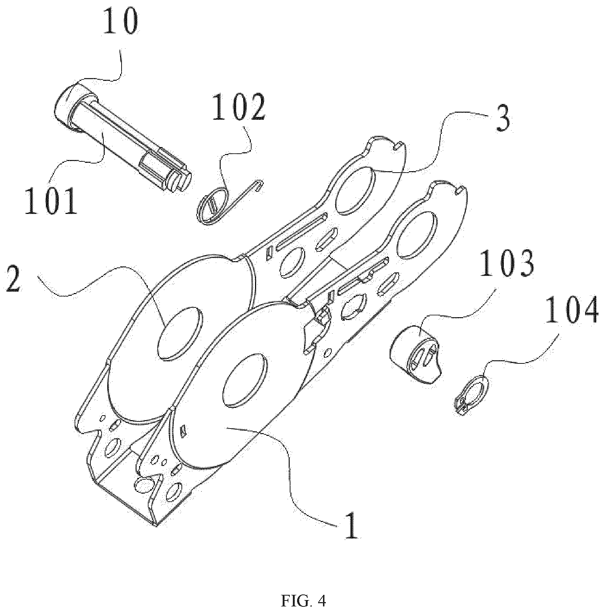

Referring to FIG. 4, a second speed reduction mechanism 10 is arranged in a middle position of the tightening frame 1 between the first speed reduction mechanism 4 and the tightening mechanism 6, the movable webbing 7 passes through the second deceleration mechanism 10, the second speed reduction mechanism 10 comprises a deceleration pin 101, a reset coil spring 102, a knob switch 103 and a first retaining ring 104, the deceleration pin 101 passes through the tightening frame 1 and rotates at a certain angle in the tightening frame 1, notches for passing the movable webbing 7 are arranged in a middle position of the deceleration pin 101, and one end of the notches of the deceleration pin 101 is set to be open, the reset coil spring 102 is sleeved on an outside of the deceleration pin 101, and one end of the reset coil spring 102 is lapped and clamped on an outside of the tightening frame 1, the other end of the reset coil spring 102 is caught in the notches of the deceleration pin 101, forming locking positions at both ends, so that there is torque between the reset coil spring 102 and the deceleration pin 101, the knob switch 103 is fixedly mounted on one end of the deceleration pin 101 away from the reset coil spring 102, and one end of the deceleration pin 101 passes through the knob switch 103, the knob switch 103 is not only installed and connected with the deceleration pin 101, but an outer side of the knob switch 103 is also inserted and locked inside one side of the tightening frame 1, its connection has a locking position, making it convenient to limit the position of the knob switch 103, the first retaining ring 104 is sleeved on the outside of the deceleration pin 101 passing through the knob switch 103, the open notches at a middle section of the deceleration pin 101 forms a webbing channel; by rotating the deceleration pin 101, the clamping angles of the notches against the webbing can be adjusted, thereby enabling tension regulation; when the knob switch 103 rotates the deceleration pin 101, the contact areas between the notch edges and the webbing change, resulting in variations in frictional force; two ends of the reset coil spring 102 are respectively secured to the tightening frame 1 and the deceleration pin 101; when the knob is rotated to adjust the tension, the reset coil spring 102 is twisted to store energy; upon releasing the knob, the torsional force of the spring drives the deceleration pin 101 to automatically return to its original position, thus maintaining the preset tension value.

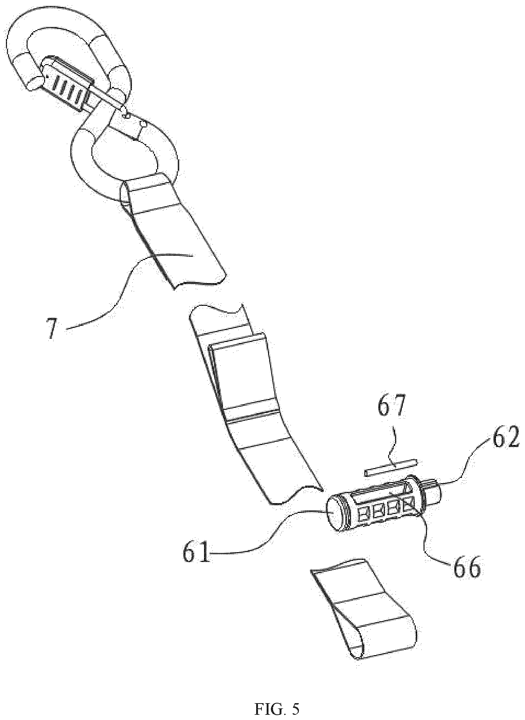

Referring to FIG. 5, the tightening mechanism 6 comprises a webbing-retracting shaft 61, a power joint 62, a shaft sleeve 63, a second retaining ring 64, a flange 65, a tapered slot 66 and an anchor pin 67, the tapered slot 66 is configured to be in shapes such as circular, rectangular, triangular, etc., the webbing-retracting shaft 61 is rotatably mounted inside the tightening frame 1, the power joint 62 is integrally connected to one end of the webbing-retracting shaft 61, the power joint 62 is transmission-connected to the brake assembly 8, the flange 65 is integrally arranged at one end of the webbing-retracting shaft 61, the flange 65 is utilized to provide positional limitation when the webbing-retracting shaft 61 is inserted into the tightening frame 1, a shaft sleeve 63 is arranged at a connection between the other end of the webbing-retracting shaft 61 and the tightening frame 1, the second retaining ring 64 is sleeved on one end of the webbing-retracting shaft 61 close to an outside of the shaft sleeve 63 to limit and fix the webbing-retracting shaft 61, the tapered slot 66 is arranged on the webbing-retracting shaft 61, the anchor pin 67 is fixedly mounted inside the tapered slot 66, one end of the movable webbing 7 passes through the tapered slot 66 and is sleeved and fixed with the anchor pin 67 and is wound around the webbing-retracting shaft 61; one end of the movable webbing 7 winding around the anchor pin 67 is provided with a webbing loop, the webbing loop is connected with the anchor pin 67 by fitting over it, the brake assembly 8 serves as the power source, generating rotational power, the power joint 62 is integrally connected to the webbing-retracting shaft 61 and is also in transmission connection with the brake assembly 8, this allows the rotational power generated by the brake assembly 8 to be transmitted to the webbing-retracting shaft 61 through the power joint 62, causing the webbing-retracting shaft 61 to rotate inside the tightening frame 1; one end of the movable webbing 7 is provided with the webbing loop, the webbing loop is fitted onto the anchor pin 67 fixed in the tapered slot 66 of the webbing-retracting shaft 61, thereby securing one end of the movable webbing 7 to the webbing-retracting shaft 61. When the webbing-retracting shaft 61 rotates under power drive, the movable webbing 7 will gradually wind around the webbing-retracting shaft 61, achieving the tightening of the movable webbing 7.

### Embodiment 2

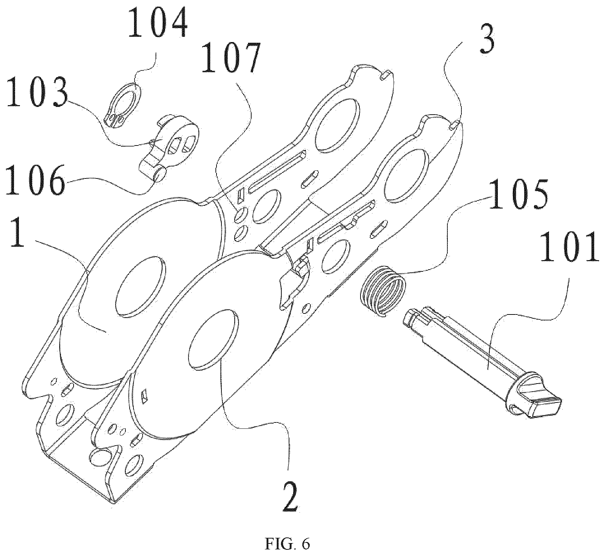

Referring to FIG. 6, the second speed reduction mechanism 10 comprises a deceleration pin 101, a knob switch 103, a first retaining ring 104, a pressure spring 105, a gear pin 106 and gear holes 107, the deceleration pin 101 passes through the tightening frame 1 and rotates at a certain angle in the tightening frame 1, notches for passing the movable webbing 7 are arranged in a middle position of the deceleration pin 101, and one end of the notches of the deceleration pin 101 is set to be open, the pressure spring 105 is sleeved on an outside of the deceleration pin 101, the pressure spring 105 is positioned between one end of the deceleration pin 101 and a sidewall of the tightening frame 1, so that the deceleration pin 101 always has a force to keep away from the tightening frame 1, this arrangement facilitates the engagement of the gear pin 106 into the gear hole 107, preventing from disengaging; the knob switch 103 is fixedly mounted on one end of the deceleration pin 101 away from the pressure spring 105, and one end of the deceleration pin 101 passes through the knob switch 103 and is fixedly connected to the first retaining ring 104, a cylindrical gear pin 106 is formed on one side of the knob switch 103 close to the tightening frame 1, and multiple gear holes 107 are arranged on a side wall of the tightening frame 1 corresponding to the gear pin 106; one end of the deceleration pin 101 away from the knob switch 103 is formed with a rectangular protrusion for easy twisting, the setting of the gear pin 106 and the gear holes 107 can make the rotation angle of the deceleration pin 101 adjustable by the gear; the movable webbing 7 passes through the open notches formed at the middle section of the deceleration pin 101, when the tightening mechanism 6 drives the movable webbing 7 to move, the deceleration pin 101 exerts a certain degree of resistance against the webbing, this is because there is not entirely smooth movement between the deceleration pin 101 and the tightening frame 1, a certain level of frictional force exists, additionally, as the movable webbing 7 traverses the notches, it generates friction with an inner wall of the deceleration pin 101, thereby achieving an initial reduction in the movement speed of the movable webbing 7; the pressure spring 105 is sleeved over an outer side of the deceleration pin 101 and positioned between one end of the deceleration pin 101 and the sidewall of the tightening frame 1, the spring remains in a constantly compressed state, exerting a force on the deceleration pin 101 that pushes it away from the sidewall of the tightening frame 1. This force enables the gear pin 106 on the deceleration pin 101 to snugly engage with the corresponding gear hole 107 on the sidewall of the tightening frame 1, thereby preventing the deceleration pin 101 from accidentally disengaging or rotating freely. The design of multiple gear holes 107 offers a variety of deceleration gear options. Operators can precisely adjust the rotation angle of the deceleration pin 101 according to actual requirements, such as varying object weights or tension requirements, thereby achieving a controlled degree of deceleration for the movable webbing 7.

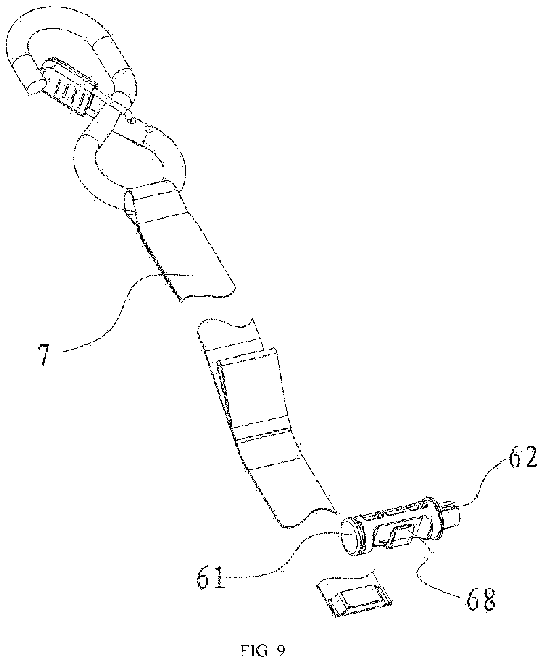

Referring to FIG. 9, the tightening mechanism 6 comprises a webbing-retracting shaft 61, a power joint 62, a shaft sleeve 63, a second retaining ring 64, a flange 65 and a tongue piece 68, the webbing-retracting shaft 61 is rotatably mounted inside the tightening frame 1, the power joint 62 is integrally connected to one end of the webbing-retracting shaft 61, the power joint 62 is transmission-connected to the brake assembly 8, the flange 65 is integrally arranged at one end of the webbing-retracting shaft 61, a shaft sleeve 63 is arranged at a connection between the other end of the webbing-retracting shaft 61 and the tightening frame 1, the second retaining ring 64 is sleeved on one end of the webbing-retracting shaft 61 close to an outside of the shaft sleeve 63, a rectangular groove is formed on an surface of the webbing-retracting shaft 61, the tongue piece 68 is fixedly arranged on an surface of the groove, and one end of the movable webbing 7 is hung and fixed on the tongue piece 68 and wound around the webbing-retracting shaft 61; the connection between the movable webbing 7 and the webbing-retracting shaft 61 is equipped with a U-shaped pocket corresponding to the tongue piece 68, the U-shaped pocket at one end of the movable webbing 7 can be engaged with the tongue piece 68, facilitating the connection between the movable webbing 7 and the webbing-retracting shaft 61, the insertion structure of the tongue piece 68 and the U-shaped pocket allows for quick assembly and disassembly of the movable webbing 7 and the webbing-retracting shaft 61, without the need for complex fastening.

### Embodiment 3

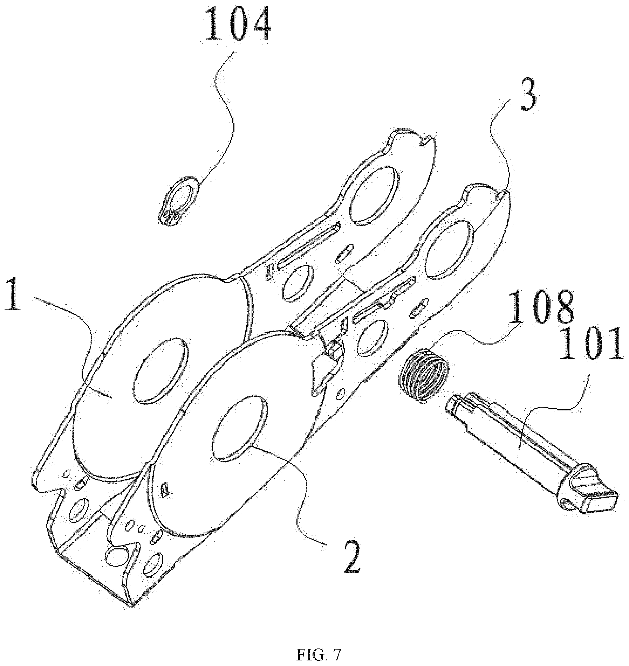

Referring to FIG. 7, the second speed reduction mechanism 10 comprises a deceleration pin 101, a first retaining ring 104, a damping spring 108, the deceleration pin 101 passes through the tightening frame 1 and rotates in the tightening frame 1, notches for passing the movable webbing 7 are arranged in a middle position of the deceleration pin 101, and one end of the notches of the deceleration pin 101 is set to be open, the damping spring 108 is sleeved on an outside of the deceleration pin 101, the damping spring 108 is arranged between the deceleration pin 101 and a side wall of the tightening frame 1, the damping spring 108 can increase the resistance during the rotation of the deceleration pin 101 through its clamping action on the deceleration pin 101, enabling stepless adjustment of the deceleration pin 101, the first retaining ring 104 is sleeved on an end of the deceleration pin 101 away from the damping spring 108, the damping spring 108 is sleeved on the outside of the deceleration pin 101, the damping spring 108 is arranged between the deceleration pin 101 and the side wall of the tightening frame 1, When an operator rotates the deceleration pin 101, the damping spring 108 undergoes compression or stretching; due to the spring's inherent elasticity, it generates a force acting in the direction opposite to the rotation; this opposing force is applied to the deceleration pin 101, imposing additional resistance during the rotation of the deceleration pin 101; by adjusting the rotation angle of the deceleration pin 101, the degree of deformation in the damping spring 108 can be modified, thereby altering the magnitude of the resistance it produces; this method of continuously varying the spring's deformation to regulate resistance enables stepless adjustment of the deceleration pin 101. The design of the damping spring 108 enables the second speed reduction mechanism 10 to achieve stepless adjustment. Operators can flexibly modify the rotation angle of the deceleration pin 101 according to actual operational requirements, such as varying object weights or tightening speed requirements, thereby precisely controlling the deceleration rate of the movable webbing 7. Compared to stepped adjustment, stepless adjustment offers finer, more accurate deceleration control, allowing the safety controlled tensioning device to better adapt to diverse and complex working scenarios.

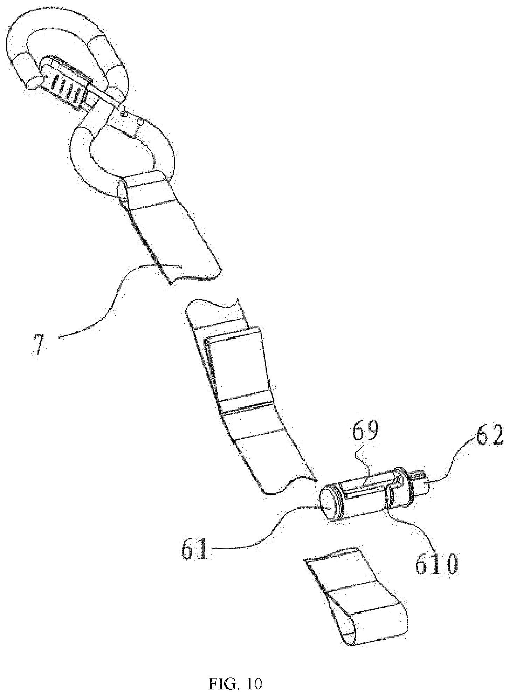

Referring to FIG. 10, the tightening mechanism 6 comprises a webbing-retracting shaft 61, a power joint 62, a shaft sleeve 63, a second retaining ring 64, a flange 65, a through slot 69 and a webbing-passing slot 610, the webbing-retracting shaft 61 is rotatably mounted inside the tightening frame 1, the power joint 62 is integrally connected to one end of the webbing-retracting shaft 61, the power joint 62 is transmission-connected to the brake assembly 8, the flange 65 is integrally arranged at one end of the webbing-retracting shaft 61, a shaft sleeve 63 is arranged at a connection between the other end of the webbing-retracting shaft 61 and the tightening frame 1, the second retaining ring 64 is sleeved on one end of the webbing-retracting shaft 61 close to an outside of the shaft sleeve 63, an interior of the webbing-retracting shaft 61 is provided with the rectangular through slot 69, the webbing-passing slot 610 is located on a surface of the webbing-retracting shaft 61, and the webbing-passing slot 610 is in communication with the rectangular through slot 69, one end of the movable webbing 7 winding around the webbing-retracting shaft 61 is provided with a webbing loop, the webbing loop can be hung on the surface of the webbing-retracting shaft 61 through the webbing-passing slot 610, which is convenient for the installation of the movable webbing 7, the webbing loop at one end of the movable webbing 7 can be hooked onto the webbing-retracting shaft 61 via the webbing-passing slot 610 on the surface of the webbing-retracting shaft 61, the webbing-passing slot 610 is interconnected with the rectangular through slot 69 inside the webbing-retracting shaft 61, allowing the webbing loop to penetrate into the rectangular through slot 69 for enhanced fixation onto the webbing-retracting shaft 61. When the webbing-retracting shaft 61 rotates under power drive, the movable webbing 7 will gradually wind around the webbing-retracting shaft 61, achieving the tightening of the movable webbing 7.

### Embodiment 4

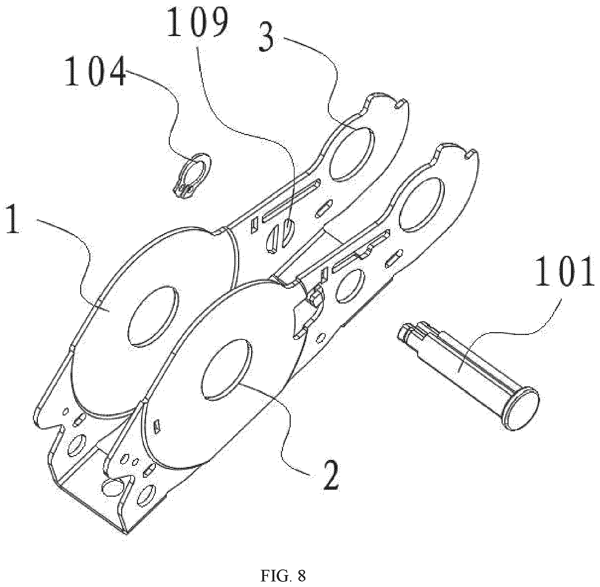

Referring to FIG. 8, the second speed reduction mechanism 10 comprises a deceleration pin 101, a first retaining ring 104, fixing holes 109, notches for passing the movable webbing 7 are arranged in a middle position of the deceleration pin 101, and one end of the notches of the deceleration pin 101 is set to be open, fixing holes 109 are arranged on one side of the tightening frame 1 corresponding to the notches at one open end of the deceleration pin 101, one end of the deceleration pin 101 with the open notches is inserted into the fixing holes 109, and the first retaining ring 104 is sleeved on one end of the deceleration pin 101 with the open notches; the deceleration pin 101 is securely installed and position-limited via the first retaining ring 104, which prevents the deceleration pin 101 from disengaging from the tightening frame 1; open notches provided in one end of the deceleration pin 101 are inserted into the corresponding fixing holes 109 on one side of the tightening frame 1, enabling the deceleration pin 101 to achieve stable support and precise positioning within the tightening frame 1. Meanwhile, the first retaining ring 104 is sleeved on one end of notches in the deceleration pin 101, serving as a limit. The first retaining ring 104 prevents the deceleration pin 101 from disengaging from the fixing hole 109 during operation, thereby ensuring the stability of the connection between the deceleration pin 101 and the tightening frame 1. This stability guarantees the proper functioning of the entire second speed reduction mechanism 10. The friction generated between the movable webbing 7 and the inner walls of the notches on the deceleration pin 101 reduces the webbing's speed during tightening or loosening processes, which avoids a series of problems caused by the webbing moving too fast.

## Claims

1. A safety controlled tensioning device, comprising a tightening frame (1), first through holes (2) are symmetrically arranged at one end of the tightening frame (1), second through holes (3) are symmetrically arranged at one end of the tightening frame (1) away from the first through holes (2), a first speed reduction mechanism (4) is installed inside the second through holes (3), and a driving handle (5) is pivotally installed outside the first speed reduction mechanism (4), a tightening mechanism (6) is arranged inside the tightening frame (1), a movable webbing (7) is rolled up on the tightening mechanism (6), and the movable webbing (7) passes through the first speed reduction mechanism (4), a brake assembly (8) for driving the tightening mechanism (6) is fixedly installed on one side of the tightening frame (1), and a fixed webbing (9) is fixedly connected to one end of the tightening frame (1) away from the first speed reduction mechanism (4), a second speed reduction mechanism (10) is arranged in a middle position of the tightening frame (1) between the first speed reduction mechanism (4) and the tightening mechanism (6), the movable webbing (7) passes through the second deceleration mechanism (10).

2. The safety controlled tensioning device according to claim 1, wherein the second speed reduction mechanism (10) comprises a deceleration pin (101), a reset coil spring (102), a knob switch (103) and a first retaining ring (104), the deceleration pin (101) passes through the tightening frame (1) and rotates at a certain angle in the tightening frame (1), notches for passing the movable webbing (7) are arranged in a middle position of the deceleration pin (101), and one end of the notches of the deceleration pin (101) is set to be open, the reset coil spring (102) is sleeved on an outside of the deceleration pin (101), and one end of the reset coil spring (102) is lapped and clamped on an outside of the tightening frame (1), the knob switch (103) is fixedly mounted on one end of the deceleration pin (101) away from the reset coil spring (102), and one end of the deceleration pin (101) passes through the knob switch (103), the first retaining ring (104) is sleeved on the outside of the deceleration pin (101) passing through the knob switch (103).

3. The safety controlled tensioning device according to claim 1, wherein the second speed reduction mechanism (10) comprises a deceleration pin (101), a knob switch (103), a first retaining ring (104), a pressure spring (105), a gear pin (106) and gear holes (107), the deceleration pin (101) passes through the tightening frame (1) and rotates at a certain angle in the tightening frame (1), notches for passing the movable webbing (7) are arranged in a middle position of the deceleration pin (101), and one end of the notches of the deceleration pin (101) is set to be open, the pressure spring (105) is sleeved on an outside of the deceleration pin (101), the knob switch (103) is fixedly mounted on one end of the deceleration pin (101) away from the pressure spring (105), and one end of the deceleration pin (101) passes through the knob switch (103) and is fixedly connected to the first retaining ring (104), a cylindrical gear pin (106) is formed on one side of the knob switch (103) close to the tightening frame (1), and multiple gear holes (107) are arranged on a side wall of the tightening frame (1) corresponding to the gear pin (106).

4. The safety controlled tensioning device according to claim 1, wherein the second speed reduction mechanism (10) comprises a deceleration pin (101), a first retaining ring (104), a damping spring (108), the deceleration pin (101) passes through the tightening frame (1) and rotates in the tightening frame (1), notches for passing the movable webbing (7) are arranged in a middle position of the deceleration pin (101), and one end of the notches of the deceleration pin (101) is set to be open, the damping spring (108) is sleeved on an outside of the deceleration pin (101), the damping spring (108) is arranged between the deceleration pin (101) and a side wall of the tightening frame (1), and the first retaining ring (104) is sleeved on an end of the deceleration pin (101) away from the damping spring (108).

5. The safety controlled tensioning device according to claim 1, wherein the second speed reduction mechanism (10) comprises a deceleration pin (101), a first retaining ring (104), fixing holes (109), notches for passing the movable webbing (7) are arranged in a middle position of the deceleration pin (101), and one end of the notches of the deceleration pin (101) is set to be open, fixing holes (109) are arranged on one side of the tightening frame (1) corresponding to the notches at one open end of the deceleration pin (101), one end of the deceleration pin (101) with the open notches is inserted into the fixing holes (109), and the first retaining ring (104) is sleeved on one end of the deceleration pin (101) with the open notches.

6. The safety controlled tensioning device according to claim 1, wherein the tightening mechanism (6) comprises a webbing-retracting shaft (61), a power joint (62), a shaft sleeve (63), a second retaining ring (64), a flange (65), a tapered slot (66) and an anchor pin (67), the webbing-retracting shaft (61) is rotatably mounted inside the tightening frame (1), the power joint (62) is integrally connected to one end of the webbing-retracting shaft (61), the power joint (62) is transmission-connected to the brake assembly (8), the flange (65) is integrally arranged at one end of the webbing-retracting shaft (61), a shaft sleeve (63) is arranged at a connection between the other end of the webbing-retracting shaft (61) and the tightening frame (1), the second retaining ring (64) is sleeved on one end of the webbing-retracting shaft (61) close to an outside of the shaft sleeve (63), the tapered slot (66) is arranged on the webbing-retracting shaft (61), the anchor pin (67) is fixedly mounted inside the tapered slot (66), one end of the movable webbing (7) passes through the tapered slot (66) and is sleeved and fixed with the anchor pin (67) and is wound around the webbing-retracting shaft (61).

7. The safety controlled tensioning device according to claim 1, wherein the tightening mechanism (6) comprises a webbing-retracting shaft (61), a power joint (62), a shaft sleeve (63), a second retaining ring (64), a flange (65) and a tongue piece (68), the webbing-retracting shaft (61) is rotatably mounted inside the tightening frame (1), the power joint (62) is integrally connected to one end of the webbing-retracting shaft (61), the power joint (62) is transmission-connected to the brake assembly (8), the flange (65) is integrally arranged at one end of the webbing-retracting shaft (61), a shaft sleeve (63) is arranged at a connection between the other end of the webbing-retracting shaft (61) and the tightening frame (1), the second retaining ring (64) is sleeved on one end of the webbing-retracting shaft (61) close to an outside of the shaft sleeve (63), a rectangular groove is formed on an surface of the webbing-retracting shaft (61), the tongue piece (68) is fixedly arranged on an surface of the groove, and one end of the movable webbing (7) is hung and fixed on the tongue piece (68) and wound around the webbing-retracting shaft (61).

8. The safety controlled tensioning device according to claim 1, wherein the tightening mechanism (6) comprises a webbing-retracting shaft (61), a power joint (62), a shaft sleeve (63), a second retaining ring (64), a flange (65), a through slot (69) and a webbing-passing slot (610), the webbing-retracting shaft (61) is rotatably mounted inside the tightening frame (1), the power joint (62) is integrally connected to one end of the webbing-retracting shaft (61), the power joint (62) is transmission-connected to the brake assembly (8), the flange (65) is integrally arranged at one end of the webbing-retracting shaft (61), a shaft sleeve (63) is arranged at a connection between the other end of the webbing-retracting shaft (61) and the tightening frame (1), the second retaining ring (64) is sleeved on one end of the webbing-retracting shaft (61) close to an outside of the shaft sleeve (63), an interior of the webbing-retracting shaft (61) is provided with the rectangular through slot (69), the webbing-passing slot (610) is located on a surface of the webbing-retracting shaft (61), and the webbing-passing slot (610) is in communication with the rectangular through slot (69).

9. The safety controlled tensioning device according to claim 1, wherein the first speed reduction mechanism (4) comprises a pair of semi-circular shafts (41) passing through the second through holes (3), limit disks (42), semi-circular holes (43), a fixing sleeve (44), a connecting shaft (45), and a rotating knob (46), the semi-circular holes (43) corresponding to the semi-circular shafts (41) are provided with a pair, and are arranged in a middle of each limit disk (42), both ends of the pair of semi-circular shafts (41) are inserted into the limit disks (42) through the semi-circular holes (43), a gap is formed between the two semi-circular shafts (41) for the movable webbing (7) to pass through, the fixing sleeve (44) is sleeved on one end of the pair of semi-circular shafts (41), and the rotating knob (46) is sleeved on the other end of the pair of semi-circular shafts (41), the fixing sleeve (44), the rotating knob (46), and the semi-circular shafts (41) are all connected and limited by the connecting shaft (45) passing through their interiors, the movable webbing (7) passes through the gap between the semi-circular shafts (41) and is wound around the tightening mechanism (6).
